# EUROPEAN PATENT SPECIFICATION

(11) **EP 3 462 594 B1**
(45) Date of publication and mention of the grant of the patent: **05.01.2022**
(21) Application number: 17194336.8
(22) Date of filing: 02.10.2017
(51) Int. Cl.: H02M 7/487, H02M 7/483

(54) **FIVE-LEVEL CONVERTER**
FÜNFSTUFENWANDLER
CONVERTISSEUR À CINQ NIVEAUX

(43) Date of publication of application: 03.04.2019
(73) Proprietor: FIMER S.p.A., 20144 Milano (IT)
(72) Inventor: Giomarelli, Stefano, 52100 Arezzo (IT); Grotti, Stefano, 52022 Cavriglia Arezzo (IT)
(74) Representative: Kolster Oy Ab

(56) References cited:
- EP-A1- 2 219 287

## Description

### FIELD OF THE INVENTION

The invention relates to an electrical converter and to a method of controlling the converter.

### BACKGROUND OF THE INVENTION

Compared to a two-level converter, a multi-level converter may provide the following advantages. It may generate low harmonic content, due to a multi-level waveform and therefore may reduce filter requirements and/or losses of a motor. Furthermore, low-voltage high performance semiconductors may be used for high voltage applications.

On the other hand, additional efforts are required for the generation of more complex pulse width modulation schemes and the balancing of voltage stress of the components of the converter.

Examples, of popular five-level voltage source converters, are provided with the following references.

US 4 203 151 A relates to a neutral point clamped (NPC) converter. Neutral point clamped converters may have an asymmetric voltage stress distribution of the clamp diodes.

FR 2 679 715 A1 relates to a flying capacitor based converter. Such a converter may require many flying capacitors, which may require additional voltage balancing control and a startup circuit.

US 2007/0235293 A1 relates to an active neutral point clamped (ANPC) converter. Such a converter may combine advantages of an NPC converter and a flying capacitor based converter. It may provide a balanced voltage stress distribution of components. However, it requires a flying-capacitor.

WO 2011/132206 A1 relates to a T-type converter, which does not have a flying capacitor. However, the inner-side switches, directly interconnecting the DC link neutral point and the AC output, may suffer from high voltage stress.

EP 2 219 287 A1 shows a voltage converter, with a DC side generator arrangement of four series-connected voltage generators and an AC side switch arrangement of four series-connected bidirectional switches. The generator arrangement and the switch arrangement are connected in parallel and are additionally interconnected with two central switching branches, each of which comprises two bidirectional switches that are connected in anti-series. Each of the central switching branches interconnects a midpoint of an upper or lower half of the generator arrangement with a midpoint of an upper or lower half of the switch arrangement. Furthermore, the midpoints of the central switching branches are connected via diodes with a midpoint of the generator arrangement.

### DESCRIPTION OF THE INVENTION

It is an objective of the invention to provide a multi-level converter with low voltage stress, simple control and a low number of semiconductor components.

This objective is achieved by the subject-matter of the independent claims. Further exemplary embodiments are evident from the dependent claims and the following description.

An aspect of the invention relates to an electrical multi-level converter, in particular a five-level converter. The converter, which may be controlled as a voltage source converter, may be adapted for generating a five-level AC output voltage from a DC input voltage. The converter also may be used as rectifier for rectifying an AC voltage into a DC voltage.

For example, the converter may be used for supplying an electrical motor with electrical power or for converting the electrical power of a generator into a voltage to be supplied into an electrical grid. It has to be noted that the electrical converter may be used in applications, with currents of more than 100 A and/or more than 1000 V.

The converter may be used as a high voltage photovoltaic converter, for example for converting voltages of more than 1.5 kV. It also may be used in medium voltage AC drive applications.

According to the invention, an electrical multi-level converter is provided in accordance with claim 1. The converter comprises: a DC link composed of a first upper capacitor, a second upper capacitor, a first lower capacitor and a second lower capacitor, which are series connected with each other between a positive DC input and a negative DC input and which provide a neutral point between the second upper capacitor and the first lower capacitor. The capacitors all may have the same capacity and/or the same voltage rating. The positive DC input and the negative DC input may be connected to a DC voltage source or DC load, such as a rectifier.

The converter comprises furthermore an AC side switch arrangement composed of a first upper switch, a second upper switch, a first lower switch and a second lower switch, which are series connected with each other between the positive DC input and the negative DC input and which provide an AC output between the second upper switch and the first lower switch. All the switches may comprise at least one semiconductor switch, such as a transistor, thyristor, IGBT, IGCT, etc. The AC input may be connected to an AC load.

For generating a multi-phase output voltage, it may be possible that several converters as described herein are connected in parallel via their DC inputs. These converters may share a common DC link as described herein and/or may provide the multi-phase output voltage at their AC outputs.

The converter furthermore comprises an intermediate switch arrangement comprising an upper intermediate switch arrangement and a lower intermediate switch arrangement. The intermediate switch arrangement also may comprise semiconductor switches for interconnecting the points between the DC link capacitors, such as the neutral point, with a point between the first and second upper switch and a point between the first and second lower switch. With the intermediate switch arrangement, not only the voltage across the complete DC link may be provided to the AC output, but also the voltages provided by the other points between the DC link capacitors.

The upper intermediate switch arrangement interconnects the neutral point of the DC link with an upper AC side point via an upper diode and an AC side upper auxiliary switch. The upper AC side point is provided between the first upper switch and the second upper switch. Furthermore, the upper intermediate switch arrangement is adapted for interconnecting an upper DC link point with the upper AC side point via the AC side upper auxiliary switch. The upper DC link point is provided between the first upper capacitor and the second upper capacitor.

Analogously, the lower intermediate switch arrangement interconnects the neutral point with a lower AC side point via a lower diode and an AC side lower auxiliary switch. The lower AC side point is provided between the first lower switch and the second lower switch. Furthermore, the lower intermediate switch arrangement is adapted for interconnecting a lower DC link point with the lower AC side point via the AC side lower auxiliary switch, the lower DC link point provided between the first lower capacitor and the second lower capacitor.

As the switches of the AC side switch arrangement, the auxiliary switches may comprise at least one semiconductor switch, such as a transistor, thyristor, IGBT, IGCT, etc. The semiconductor switches used in the converter all may be of the same type.

The converter has a balanced voltage stress distribution across its components, such as diodes and semiconductor switches, without the need of an additional flying capacitor. This may enable a high power density implementation with high performance low voltage components, while keeping a simple structure.

The converter may be symmetrically designed. In particular, the first upper capacitor and the second upper capacitor of the DC link may be designed symmetric to the first upper capacitor and the second upper capacitor. The same applies to the first and second upper switch and the first and second lower switch. Furthermore, the upper intermediate switch arrangement and the lower intermediate switch arrangement may be symmetrically designed.

According to the invention, the upper intermediate switch arrangement comprises a further upper diode interconnecting the upper DC link point with the AC side upper auxiliary switch. Analogously, the lower intermediate switch arrangement comprises a further lower diode interconnecting the lower DC link point with the AC side lower auxiliary switch. These further upper and lower diodes are the only components to connect the DC link points with the respective AC side auxiliary switch.

According to an embodiment of the invention, each of the AC side upper auxiliary switch, and the AC side lower auxiliary switch, comprises a semiconductor switch, for example in parallel to a freewheeling diode. The freewheeling diode may have a reverse conduction direction with respect to the switchable conduction direction of the semiconductor switch. It also may be that the semiconductor switch has an intrinsic body diode, such as a MOSFET.

According to the invention, the upper intermediate switch arrangement comprises an upper auxiliary diode interconnecting the upper DC link point between two series connected partial switches of the first upper switch. The conduction direction of the upper auxiliary diode may be away from the upper DC link point, i.e. towards the upper AC side point. Analogously, the lower intermediate switch arrangement comprises a lower auxiliary diode interconnecting the lower DC link point between two series connected partial switches of the second lower switch. The conduction direction of the lower auxiliary diode may be towards the lower DC link point, i.e. away from the upper AC side point. This is a further possibility how the upper (or lower) intermediate switch arrangement may provide a current path between the upper (or lower) DC link point and the upper (or lower) AC side point.

For providing the respective voltage rating, each of the first upper switch and the second lower switch are provided as two series connected partial switches. A partial switch may comprise a semiconductor switch optional in parallel to a freewheeling diode. An auxiliary diode may be connected between the respective DC link point and the respective AC side point. The partial switch directly connected to the respective AC side point may be switched on for interconnecting the respective DC link point with the respective AC side point.

According to an embodiment of the invention, the upper diode of the upper intermediate switch arrangement has a conduction direction from the neutral point to the AC side upper auxiliary switch. The lower diode of the lower intermediate switch arrangement may have a conduction direction from the AC side lower auxiliary switch to the neutral point. This may provide current paths from the neutral point to the AC output via the upper and lower AC side points in both conduction directions.

According to an embodiment of the invention, each of the first upper switch, the second upper switch, the first lower switch and the second lower switch of the AC side switch arrangement comprises a semiconductor switch, for example in parallel to a freewheeling diode. These switches may be designed as the auxiliary switches and vice versa. Again it may be that the semiconductor switch has an intrinsic body diode, such as a MOSFET.

According to an embodiment of the invention, the first upper switch, the second upper switch, the first lower switch and the second lower switch of the AC side switch arrangement have the same voltage rating. This may be achieved by composing them of the same number of semiconductor switches connected in series, which all have the same voltage rating.

According to an embodiment of the invention, a voltage rating of the AC side upper auxiliary switch and/or the AC side lower auxiliary switch is half of a voltage rating of at least one of the first upper switch, the second upper switch, the first lower switch and the second lower switch of the AC side switch arrangement. Due to the design of the converter, the switches of the intermediate switch arrangement may have a voltage rating lower than the one of the switches of the AC side switch arrangement. This may be achieved by composing the switches of the AC side switch arrangement with twice as much semiconductor switches (of the same voltage rating) connected in series as the switches of the intermediate switch arrangement.

The same applies to other components of the intermediate switch arrangement, such as diodes.

According to an embodiment of the invention, a voltage rating of the upper diode, the further upper diode or the upper auxiliary diode, the lower diode, the further lower diode and/or the lower auxiliary diode is half of a voltage rating of at least one of the first upper switch, the second upper switch, the first lower switch and the second lower switch of the AC side switch arrangement.

A further aspect of the invention relates to a method for switching the converter as described in the above and in the following. It has to be understood that features of the method as described in the above and in the following may be features of the converter as described in the above and in the following, and vice versa.

In general, the converter is adapted to generate 5 voltage levels at the AC output. Every voltage level may be generated with a specific switching state. The converter may be controlled by a controller, which switches the switches into the specific switching states, for example with pulse width modulation.

According to an embodiment of the invention, the method comprises: in a first positive switching state, switching on the first upper switch and the second upper switch, and switching off the first lower switch, the second lower switch, the AC side upper auxiliary switch and the AC side lower auxiliary switch. This connects the AC output to the potential of the positive DC input.

According to an embodiment of the invention, the method comprises: in a second positive switching state, switching on the second upper switch and the AC side upper auxiliary switch, and switching off the first upper switch, the first lower switch, the second lower switch and the AC side lower auxiliary switch. This connects the AC output to the potential of the upper DC link point, which potential may be one half of the one of the positive DC input.

It has to be noted that a switch that is switched on may have a low resistance in its switchable conduction direction. On the other hand, a switch that is switched off may have a high resistance in its switchable conduction direction.

According to an embodiment of the invention, the method comprises: in a neutral switching state, switching on the second upper switch and the first lower switch, the AC side upper auxiliary switch and the AC side lower auxiliary switch, and switching off the first upper switch and the second lower switch. This connects the AC output to the potential of the neutral point of the DC link.

According to an embodiment of the invention, the method comprises: in a first negative switching state, switching on the first lower switch and the second lower switch, and switching off the first upper switch, the second upper switch, the AC side upper auxiliary switch and the AC side lower auxiliary switch. This connects the AC output to the potential of the negative DC input.

According to an embodiment of the invention, the method comprises: in a second negative switching state, switching on the first lower switch and the AC side lower auxiliary switch, and switching off the first upper switch, the second upper switch, the second lower switch, and the AC side upper auxiliary switch. This connects the AC output to the potential of the lower DC link point, which potential may be one half of the one of the negative DC input.

The partial switch of the first upper switch of the AC side switching arrangement, which is connected between the upper auxiliary diode and the upper AC side point, may have to be switched on in the second positive switching state. Analogously, the partial switch of the second upper switch of the AC side switching arrangement, which is connected between the lower auxiliary diode and the lower AC side point, may have to be switched on in the second negative switching state.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a schematic circuit diagram of a converter according to a comparative example, which is useful to understand the claimed invention.
Fig. 2 shows a diagram indicating a voltage produced by the converter of Fig. 1.
Fig. 3A to 3E show switching states of the converter of Fig. 1.
Fig. 4A and 4B show diagrams indicating further voltages produced by the converter of Fig. 1.
Fig. 5 shows a schematic circuit diagram of a converter according to a further comparative example.
Fig. 6 shows a schematic circuit diagram of a converter according to an embodiment of the invention.
Fig. 7A and 7B show switching states of the converter of Fig. 6.
Fig. 8 to Fig. 11 show circuit diagrams for converters with alternative embodiments.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

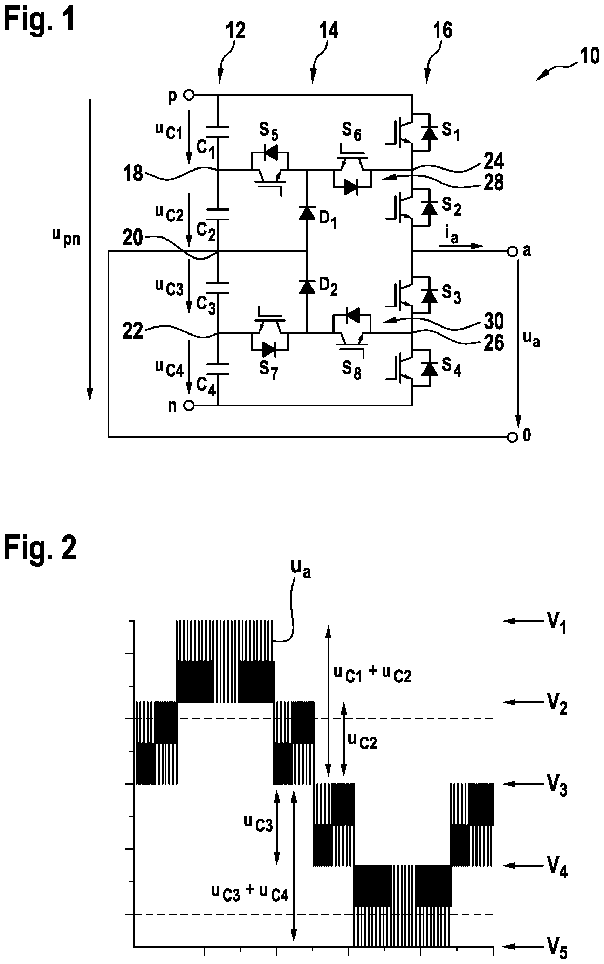

Fig. 1 shows a five-level converter 10, which comprises a DC link 12, an intermediate switch arrangement 14 and an AC side switch arrangement 16.

The DC link 12 is composed of a first upper capacitor C₁, a second upper capacitor C₂, a first lower capacitor C₃ and a second lower capacitor C₄, which are series connected with each other between a positive DC input p and a negative DC input n of the converter 10. For example, the converter 10 may be connected to a rectifier or other DC source for power supply.

An upper DC link point 18 is provided between the first upper capacitor C₁ and the second upper capacitorC₂, a neutral point 20 of the DC link is provided between the second upper capacitor C₂ and the first lower capacitor C₃ and a lower DC link point 22 is provided between the first lower capacitor C₃ and the second lower capacitor C₄. The term "point" may refer to a specific conductor of the converter 10 having a specific potential.

The AC side switch arrangement 16 is composed of a first upper switch S₁, a second upper switch S₂, a first lower switch S₃ and a second lower switch S₄, which are series connected with each other between the positive DC input p and the negative DC input n. An upper AC side point 24 is provided between the first upper switch S₁ and the second upper switch S₂, an AC output is provided between the second upper switch S₂ and the first lower switch S₃ and a lower AC side point 26 is provided between the first lower switch S₃ and the second lower switch S₄. By switching the converter as described in the above and in the following, a varying voltage is generated in the AC output a. For example, the AC output may be connected to an electrical grid, an electrical generator or an electrical motor.

The intermediate switch arrangement is used for providing voltages between the potential of the positive DC input p and the negative DC input n to the AC output a. The intermediate switch arrangement 14 comprises an upper intermediate switch arrangement 28 and a lower intermediate switch arrangement 30, which may be symmetric.

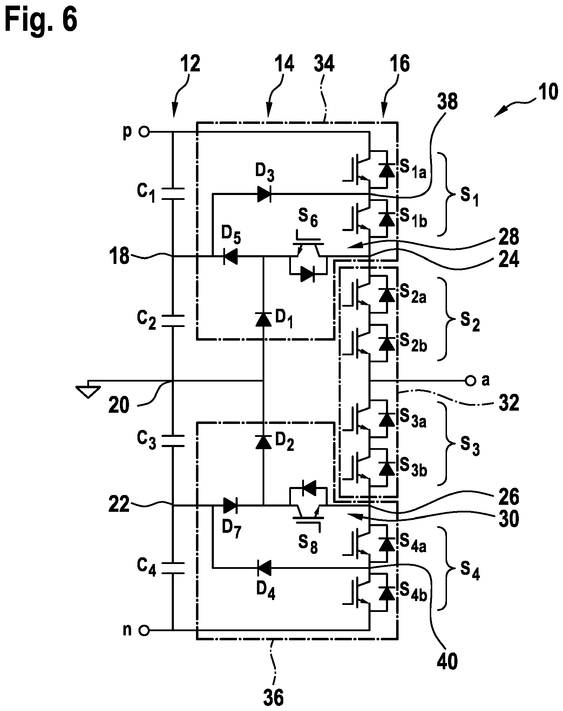

The upper intermediate switch arrangement 28 interconnects the neutral point 20 with the upper AC side point 24 via an upper diode D₁ and an AC side upper auxiliary switch S₆. Furthermore, the upper intermediate switch arrangement 28 is adapted for interconnecting the upper DC link point 18 with the upper AC side point 24 via the AC side upper auxiliary switch S₆. In Fig. 1, this is done via an upper DC side auxiliary switch S₅. Below in Fig. 6, an embodiment is shown, in which the upper DC link point 18 is connected solely via a diode with the AC side auxiliary switch S₆.

Analogously to the upper intermediate switch arrangement 28, the lower intermediate switch arrangement 30 interconnects the neutral point 20 with the lower AC side point 26 via a lower diode D₂ and an AC side lower auxiliary switch S₈. Furthermore, the lower intermediate switch arrangement 30 is adapted for interconnecting the lower DC link point 22 with the lower AC side point 26 via the AC side lower auxiliary switch S₈, either via an upper DC side auxiliary switch S₅ or via solely a diode (see Fig. 6 below).

The DC side upper auxiliary switch S₅ and the AC side upper auxiliary switch S₆ have reverse switchable conduction directions and the DC side lower auxiliary switch S₇ and the AC side lower auxiliary switch S₇ and have reverse switchable conduction directions. The switches S₅ and S₆ are connected reverse to each other in series. The upper diode D₁ is connected to their interconnection point. Analogously, the switches S₇ and S₈ are connected reverse to each other in series and the lower diode D₂ is connected to their interconnection point.

The upper diode D₁ of the upper intermediate switch arrangement 28 has a conduction direction from the neutral point 20 to the AC side upper auxiliary switch S₆ and the lower diode D₂ of the lower intermediate switch arrangement 30 has a conduction direction from the AC side lower auxiliary switch S₈ to the neutral point 20.

The switches S₁ to S₈ all may be composed of at least one semiconductor switch in parallel to a freewheeling diode. For example, as shown in Fig. 1, the switches S₁ to S₈ may comprise IGBTs as semiconductor switches.

Fig. 2 shows a diagram with an output voltage ua, that may be generated by the converter 10. The generator is adapted to generate 5 different voltage vectors or switching states V₁ to V₅, which correspond to 5 different output voltage levels. As shown in Fig. 2, the output voltage ua may be modulated with pulse width modulation to generate in average a sinusoidal voltage.

In the first, maximal positive switching state V₁, the output voltage ua is the sum of the voltage uci of the first upper capacitor C₁ and the voltage u_{C2} of the second upper capacitor C₂. The voltage uci + u_{C2} is provided by the positive DC input p.

In the second, intermediate positive switching state V₂, the output voltage ua is the voltage u_{C2} of the second upper capacitor C₂. The voltage u_{C2} is provided by the upper DC link point 18.

In the neutral switching state V₃, the output voltage ua is zero, i.e. equal to the potential of the neutral point.

In the second, intermediate negative switching state V₄, the output voltage ua is the voltage u_{C3} of the first lower capacitor C₃. The voltage u_{C3} is provided by the lower DC link point 22.

In the first, maximal negative switching state V₅, the output voltage ua is the sum of the voltage u_{C3} of the first lower capacitor C₃ and the voltage u_{C4} of the second lower capacitor C₄. The voltage u_{C3} + u_{C4} is provided by the negative DC input n.

Following table summarizes the switching states/voltage vectors V₁ to V₅ that are producible by the converter 10 and how the switches S₁ to S₈ have to be switched to produce the respective switching state. "1" means that the respective switch S₁ to S₈ is switched on and "0" means that the respective switch S₁ to S₈ is switched off.

| | vector | S₁ | S₂ | S₃ | S₄ | S₅ | S₆ | S₇ | S₈ | uₐ |
|---|---|---|---|---|---|---|---|---|---|---|
| | V₁ | 1 | 1 | 0 | 0 | 0 | 0 | 0 | 0 | u_{C1} + u_{C2} |
| | V₂ | 0 | 1 | 0 | 0 | 1 | 1 | 0 | 0 | UC2 |
| | V₃ | 0 | 1 | 1 | 0 | 0 | 0 | 0 | 0 | 0 |
| | V₄ | 0 | 0 | 1 | 0 | 0 | 0 | 1 | 1 | UC3 |
| | V₅ | 0 | 0 | 1 | 1 | 0 | 0 | 0 | 0 | u_{C3} + u_{C4} |

The switching vector table is only an example, i.e. the same vector may also be generated with different switching combinations.

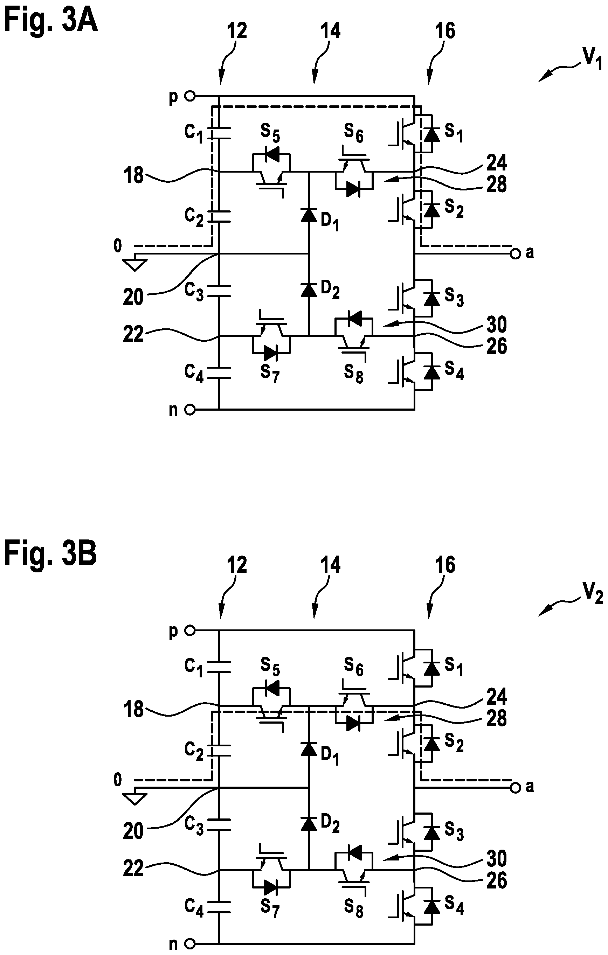

Fig. 3A to 3E illustrate the switching states V₁ to V₅. They may be seen as steps of a method for switching the converter 10 to generate 5 different output voltage levels. The current conducting paths for each switching state V₁ to V₅ are shown as dashed lines.

As shown in Fig. 3A, in the switching state V₁, the switches S₁ and S₂ are switched on, while the switches S₃ to S₈ are switched off. The AC output a is electrically connected to the positive DC output p via the switches S₁ and S₂.

As shown in Fig. 3B, in the switching state V₂, the switches S₂, S₅ and S₆ are switched on, while the switches S₁, S₃, S₄, S₇ and S₈ are switched off. The AC output a is electrically connected to the positive DC link point 18 via the switches S₅, S₆ and S₂.

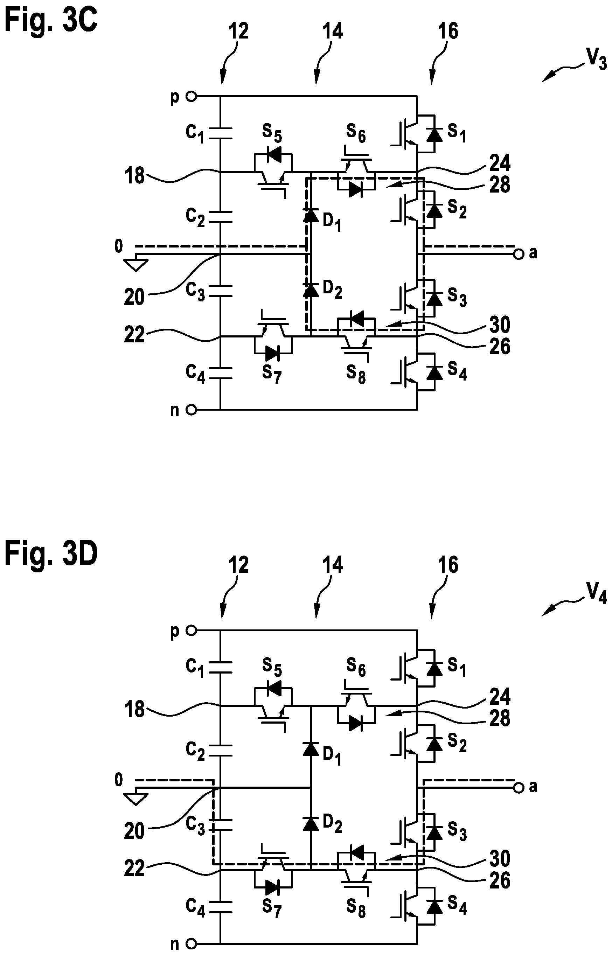

As shown in Fig. 3C, in the switching state V₃, the switches S₂, S₃, S₆ and S₈ are switched on, while the switches S₁, S₄, S₅ and S₇ are switched off. The AC output a is electrically connected to the neutral point 18 via the diode D₁ and the switches S₆ and S₂ and via the diode D₂ and the switches S₈ and S₃.

As shown in Fig. 3D, in the switching state V₄, the switches S₃, S₆ and S₇ are switched on, while the switches S₁, S₂, S₄, S₅ and S₆ are switched off. The AC output a is electrically connected to the negative DC link point 22 via the switches S₇, S₈ and S₂₃.

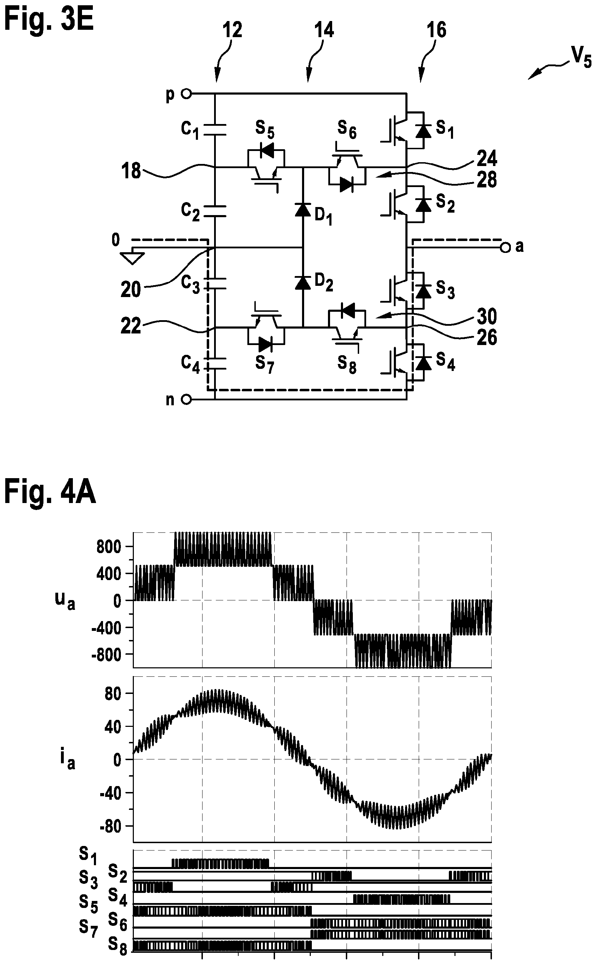

As shown in Fig. 3E, in the switching state V₅, the switches S₃ and S₄ are switched on, while the switches S₁, S₂ and S₅ to S₈ are switched off. The AC output a is electrically connected to the negative DC output n via the switches S₃ and S₄.

It should be noted that the converter 10 also may be switched in a two-level or three-level way, for example, by only using the switching states V₁ and V₅ of Fig. 3A and 3E or the switching states V₁, V₃ and V₅ of Fig. 3A, 3C and 3E. Such a switching may be beneficial in a low power mode with low frequency, since switching losses may be avoided.

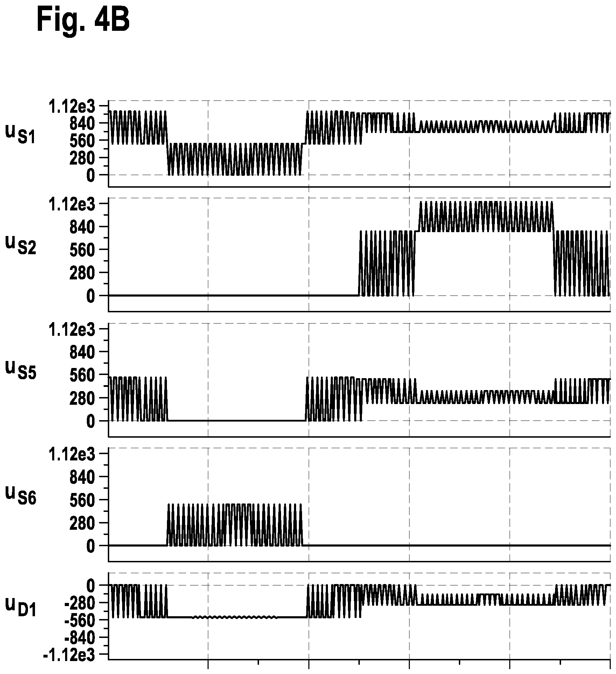

Fig. 4 shows the output voltage ua again in comparison to the output current iₐ and the switching states of the switches S1 to S8. The voltage is given in V and the current is given in A.

Fig. 4B shows voltages across above the switches of the upper part of the converter 10 for a part of the switching cycle shown in Fig. 3. u_{S1}, u_{S2}, u_{S5} and u_{S6} are the voltages across the respective switch S₁, S₂, S₅ and S₆. u_{D1} is the voltage across the diode D₁.

For Fig. 4A and 4B, the DC link voltage is uₚₙ = 2 kV and each capacitor voltage (u_{C1}, u_{C2}, u_{C3}, u_{C4}) is ¼ of uₚₙ, i.e., 500 V. As can be seen from Fig. 4B, that the voltage stress of the switches S₁ and S₂, i.e. the maximal magnitude of u_{S1} and u_{S2}, is ½ of uₚₙ and the voltage stress of the switches S₅, S₆ and of the diode D1 is ¼ of uₚₙ. The same applies to the corresponding components of the lower part of the converter 10.

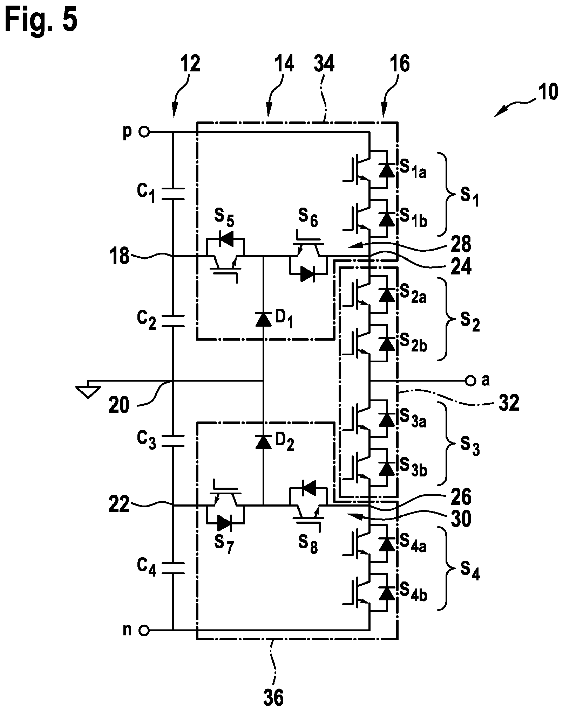

Fig. 5 shows a converter 10, which is designed to account for the different voltage ratings. The switches S₁, S₂, S₃ and S₄ have been split into two partial switches (S₁ₐ, S_{1b}), (S₂ₐ, S_{2b}), (S₃ₐ, S_{4b}) and (S₄ₐ, S_{4b}), respectively. When the same semiconductor devices are used for the partial switches as for the switches S₅, S₆, S₇, S₈ and the diodes D1, D2, the voltage rating of the switches S₁, S₂, S₃ and S₄ becomes twice as much.

Fig. 5 additionally shows that the converter 10 may be divided into three parts, i.e. a low frequency switching part 32, an upper high frequency switching part 34 and a lower high frequency switching part 36. The frequency switching part 32 comprises the switches S₂ and S₃. The upper high frequency switching part 34 comprises the switch S₁ and the upper intermediate switching arrangement 28. The lower high frequency switching part 36 comprises the switch S₄ and the lower intermediate switching arrangement 30.

The low frequency switching part 32 may be operated with a frequency of the grid and/or electrical machine connected to the AC output a. The high frequency switching parts 34 and 36 may be operated with a frequency of a pulse width modulation scheme. For example, in a positive line cycle (with switching states V₁, V₂ and V₃), S₂ is switched on (which means that both partial switches S₂ₐ and S_{2b} are switched on) and the upper high frequency part 34 is operated with pulse width modulation. Analogously, in a negative line cycle (with switching states V₃, V₄ and V₅), S₃ is switched on and the lower high frequency part 36 is operated with pulse width modulation.

Fig. 6 shows an embodiment of a converter according to the claimed invention, which is equally designed as the one of Fig. 5, in which, however, the switches S₅ and S₇ have been replaced with diodes D₃, D₄, D₅ and D₇.

The upper intermediate switch arrangement 28 comprises a further upper diode D₅ interconnecting the upper DC link point 18 with the AC side upper auxiliary switch S₆ and an upper auxiliary diode D₃ interconnecting the upper DC link point 18 between a point 38 between the two series connected partial switches S₁ₐ, S_{1b} of the first upper switch S₁. The conduction direction of the further upper diode D₅ is towards the point 18 and the conduction direction of the upper auxiliary diode D₃ is away from the point 18.

Analogously, the lower intermediate switch arrangement 30 comprises a further lower diode D₇ interconnecting the lower DC link point 22 with the AC side lower auxiliary switch S₈ and a lower auxiliary diode D₄ interconnecting the lower DC link point 22 with a point 40 between the two series connected partial switches S₄ₐ, S_{4b} of the second lower switch S₄. The conduction direction of the further lower diode D₇ is away from the point 22 and the conduction direction of the lower auxiliary diode D₄ is towards the point 18.

It has to be noted that the switches S₂ and S₃ of Fig. 6 also may be simple switches, i.e. ones, which are not divided into partial switches.

The converter 10 of Fig. 6 may be switched as the ones described in Fig. 1 to 5, except that the switch S₅, which is not present, is not switched. Furthermore, the partial switches 11b and S4a may be switched on during the switching states V₂ and V₄.

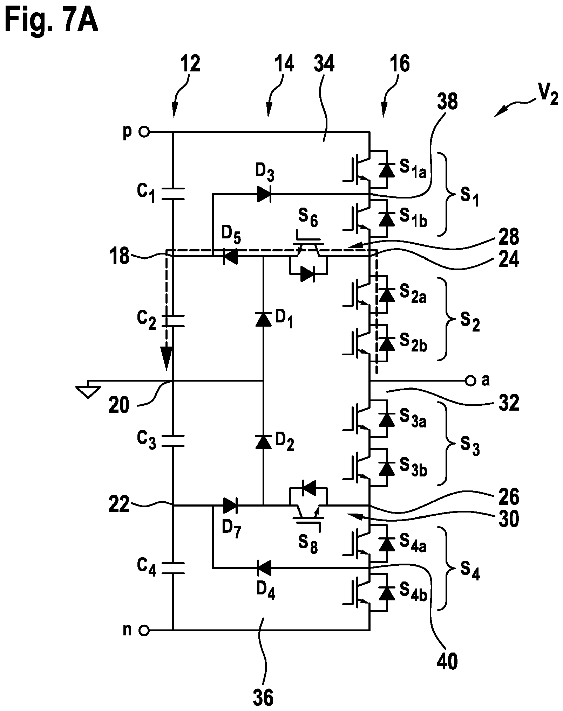

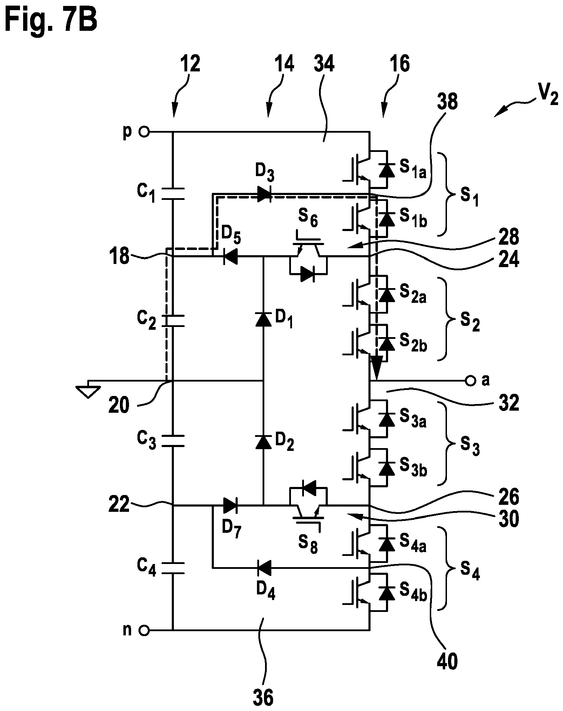

Fig. 7A and 7B illustrate the switching states V₂ for the converter 10 of Fig. 6. Fig. 7A shows the reverse conducting current path, which is along the switch S₂, the switch S₆ and the diode D₅. Fig. 7B shows the forward conducting current path, which is along the diode D3, the partial switch S_{1b}, and the switch S₂.

For the converter of Fig. 6, 7A and 7B, the voltage stress of switches S₁ₐ and S_{1b} may be effectively limited by ¼ of the DC link voltage uₚₙ.

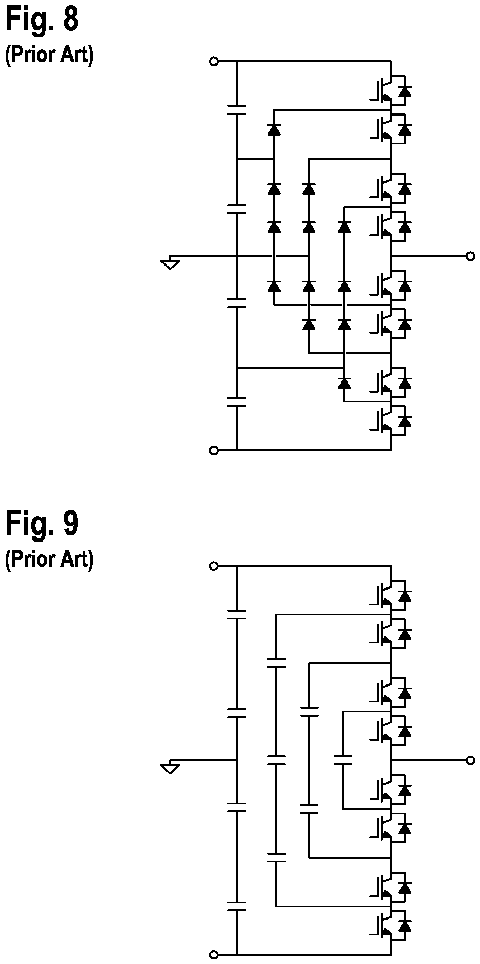

Fig. 8 to 11 show circuit diagrams of different types of five-level converters taking into account the needed voltage ratings for the components by using semiconductor devices of the same voltage ratings connected in series.

Fig. 8 shows a neutral point clamped converter.

Fig. 9 shows a flying capacitor based converter.

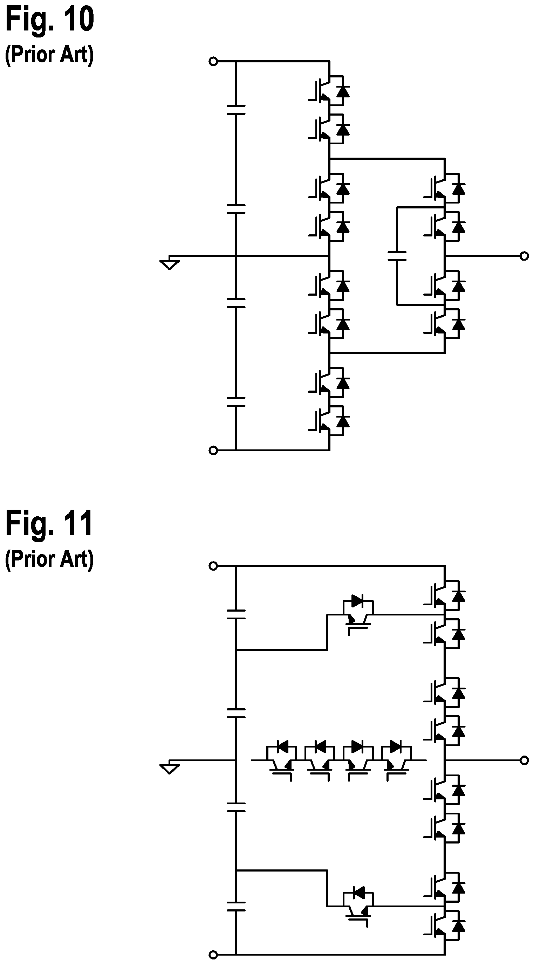

Fig. 10 shows an active neutral point clamped converter.

Fig. 11 shows a T-type converter.

Following table lists the number of needed devices (a partial switch is composed of a semiconductor switch in parallel to a freewheeling diode) for these converters in comparison with the embodiments shown in Fig. 5 and 6.

| | Fig. | 5 | 6 | 8 | 9 | 10 | 11 |
|---|---|---|---|---|---|---|---|
| | partial switches | 12 | 10 | 8 | 8 | 12 | 14 |
| | add. diodes | 2 | 6 | 12 | 0 | 0 | 0 |
| | capacitors | 4 | 4 | 4 | 10 | 5 | 4 |

It can be seen that the number of total switches and/or capacitors may be reduced, resulting in lower cost. Furthermore, compared to Fig. 9 and 10, no flying capacitors are necessary.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- C₁: first upper capacitor
- C₂: second upper capacitor
- C₃: first lower capacitor
- C₄: second lower capacitor
- S₁: first upper switch
- S₂: second upper switch
- S₃: first lower switch
- S₄: second lower switch
- S₅: DC side upper auxiliary switch
- S₆: AC side upper auxiliary switch
- S₇: DC side lower auxiliary switch
- S₈: AC side lower auxiliary switch
- p: positive DC input
- n: negative DC input
- a: AC output
- D₁: upper diode
- D₂: lower diode
- 10: multi-level converter
- 12: DC link
- 14: intermediate switch arrangement
- 16: AC side switch arrangement
- 18: upper DC link point
- 20: neutral point
- 22: lower DC link point
- 24: upper AC side point
- 26: lower AC side point
- 28: upper intermediate switch arrangement
- 30: lower intermediate switch arrangement
- ua: output voltage
- iₐ: output current
- uci: voltage of first upper capacitor
- u_{C2}: voltage of second upper capacitor
- u_{C3}: voltage of first lower capacitor
- u_{C4}: voltage of second lower capacitor
- V₁: first positive switching state
- V₂: second, intermediate positive switching state
- V₃: neutral switching state
- V₄: second, intermediate negative switching state
- V₅: first negative switching state
- usi: voltages across switch S₁
- u_{S2}: voltages across switch S₂
- uss: voltages across switch S₅
- u_{S6}: voltages across switch S₆
- uₚₙ: DC link voltage
- S₁ₐ, S_{1b}: partial switches of switch S₁
- S₂ₐ, S_{2b}: partial switches of switch S₂
- S₃ₐ, S_{4b}: partial switches of switch S₃
- S₄ₐ, S_{4b}: partial switches of switch S₄
- D₃: upper auxiliary diode
- D₄: lower auxiliary diode
- D₅: further upper diode
- D₇: further lower diode
- 32: low frequency switching part
- 34: upper high frequency switching part
- 36: lower high frequency switching part
- 38: point between partial switches S₁ₐ, S_{1b}
- 40: point between partial switches S₄ₐ, S_{4b}

## Claims

1. An electrical multi-level converter (10), comprising:
a DC link (12) composed of a first upper capacitor (C₁), a second upper capacitor (C₂), a first lower capacitor (C₃) and a second lower capacitor (C₄), which are series connected with each other between a positive DC input (p) and a negative DC input (n) and which provide a neutral point (20) between the second upper capacitor (C₂) and the first lower capacitor (C₃), an upper DC link point (18) between the first upper capacitor (C₁) and the second upper capacitor (C₂), and a lower DC link point (22) between the first lower capacitor (C₃) and the second lower capacitor (C₄);
an AC side switch arrangement (16) composed of a first upper switch (S₁), a second upper switch (S₂), a first lower switch (S₃) and a second lower switch (S₄), which are series connected with each other between the positive DC input (p) and the negative DC input (n) and which provide an AC output (a) between the second upper switch (S₂) and the first lower switch (S₃);
an intermediate switch arrangement (14) comprising an upper intermediate switch arrangement (28) and a lower intermediate switch arrangement (30);
wherein the upper intermediate switch arrangement (28) interconnects the neutral point (20) with an upper AC side point (24) via an upper diode (D₁) and an AC side upper auxiliary switch (S₆), the upper AC side point (24) provided between the first upper switch (S₁) and the second upper switch (S₂);
wherein the upper intermediate switch arrangement (28) comprises a further upper diode (D₅) interconnecting the upper DC link point (18) with the AC side upper auxiliary switch (S₆);
wherein the upper intermediate switch arrangement (28) is adapted for interconnecting the upper DC link point (18) with the upper AC side point (24) via the AC side upper auxiliary switch (S₆) and the further upper diode (D₅);
wherein the lower intermediate switch arrangement (30) interconnects the neutral point (20) with a lower AC side point (26) via a lower diode (D₂) and an AC side lower auxiliary switch (S₈), the lower AC side point (26) provided between the first lower switch (S₃) and the second lower switch (S₄);
wherein the lower intermediate switch arrangement (30) comprises a further lower diode (D₇) interconnecting the lower DC link point (22) with the AC side lower auxiliary switch (S₈);
wherein the lower intermediate switch arrangement (30) is adapted for interconnecting the lower DC link point (22) with the lower AC side point (26) via the AC side lower auxiliary switch (S₈) and the further lower diode (D₇);
**characterized in that**
the upper intermediate switch arrangement (28) comprises an upper auxiliary diode (D₃) interconnecting the upper DC link point (18) with a point (38) between two series connected partial switches (S₁ₐ, S_{1b}) of the first upper switch (S₁);
the lower intermediate switch arrangement (30) comprises a lower auxiliary diode (D₄) interconnecting the lower DC link point (22) with a point (40) between two series connected partial switches (S₄ₐ, S_{4b}) of the second lower switch (S₄).

2. The converter (10) of one of the previous claims,
wherein a conduction direction of the upper auxiliary diode (D₃) is away from the upper DC link point (18);
wherein a conduction direction of the lower auxiliary diode (D₄) is towards the lower DC link point (22).

3. The converter (10) of one of the previous claims,
wherein the upper diode (D₁) of the upper intermediate switch arrangement (28) has a conduction direction from the neutral point (20) to the AC side upper auxiliary switch (S₆);
wherein the lower diode (D₂) of the lower intermediate switch arrangement (30) has a conduction direction from the AC side lower auxiliary switch (S₈) to the neutral point (20).

4. The converter (10) of one of the previous claims,
wherein each of the first upper switch (S₁), the second upper switch (S₂), the first lower switch (S₃) and the second lower switch (S₄) of the AC side switch arrangement (16) comprises a semiconductor switch.

5. The converter (10) of one of the previous claims,
wherein the first upper switch (S₁), the second upper switch (S₂), the first lower switch (S₃) and the second lower switch (S₄) of the AC side switch arrangement (16) have the same voltage rating.

6. The converter (10) of one of the previous claims,
wherein a voltage rating of the AC side upper auxiliary switch (S₆) and/or the AC side lower auxiliary switch (S₈) is half of a voltage rating of at least one of the first upper switch (S₁), the second upper switch (S₂), the first lower switch (S₃) and the second lower switch (S₄) of the AC side switch arrangement (16).

7. The converter (10) of one of the previous claims,
wherein a voltage rating of the upper diode (D₁), a further upper diode (D₅) or an upper auxiliary diode (D₃), the lower diode (D₂), a further lower diode (D₇) and/or a lower auxiliary diode (D₄) is half of a voltage rating of at least one of the first upper switch (S₁), the second upper switch (S₂), the first lower switch (S₃) and the second lower switch (S₄) of the AC side switch arrangement (16).

8. A method for switching the converter (10) of one of the previous claims, the method comprising:
in a first positive switching state, switching on the first upper switch (S₁) and the second upper switch (S₂), and switching off the first lower switch (S₃), the second lower switch (S₄), the AC side upper auxiliary switch (S₆) and the AC side lower auxiliary switch (S₈);
in a second positive switching state, switching on the second upper switch (S₂) and the AC side upper auxiliary switch (S₆), and switching off the first upper switch (S₁), the first lower switch (S₃), the second lower switch (S₄), and the AC side lower auxiliary switch (S₈);
in a neutral switching state, switching on the second upper switch (S₂) and the first lower switch (S₃), the AC side upper auxiliary switch (S₆) and the AC side lower auxiliary switch (S₈), and switching off the first upper switch (S₁) and the second lower switch (S₂);
in a first negative switching state, switching on the first lower switch (S₃) and the second lower switch (S₄), and switching off the first upper switch (S₁), the second upper switch (S₂), the AC side upper auxiliary switch (S₆) and the AC side lower auxiliary switch (S₈);
in a second negative switching state, switching on the first lower switch (S₃) and the AC side lower auxiliary switch (S₈), and switching off the first upper switch (S₁), the second upper switch (S₂), the second lower switch (S₄) and the AC side upper auxiliary switch (S₆).

## Patentansprüche

1. Elektrischer Mehrstufenwandler (10) umfassend:
einen DC-Zwischenkreis (12), der aus einem ersten oberen Kondensator (C₁), einem zweiten oberen Kondensator (C₂), einem ersten unteren Kondensator (C₃) und einem zweiten unteren Kondensator (C₄)besteht, die zwischen einem positiven DC-Eingang (p) und einem negativen DC-Eingang (n) miteinander in Reihe geschaltet sind und die einen Neutralpunkt (20) zwischen dem zweiten oberen Kondensator (C₂) und dem ersten unteren Kondensator (C₃), einen oberen DC-Zwischenkreispunkt (18) zwischen dem ersten oberen Kondensator (C₁) und dem zweiten oberen Kondensator (C₂) und einen unteren DC-Zwischenkreispunkt (22) zwischen dem ersten unteren Kondensator (C₃) und dem zweiten unteren Kondensator (C₄) bilden;
eine AC-seitige Schalteranordnung (16), die aus einem ersten oberen Schalter (S₁), einem zweiten oberen Schalter (S₂), einem ersten unteren Schalter (S₃) und einem zweiten unteren Schalter (S₄) besteht, die zwischen dem positiven DC-Eingang (p) und dem negativen DC-Eingang (n) miteinander in Reihe geschaltet sind und die einen AC-Ausgang (a) zwischen dem zweiten oberen Schalter (S₂) und dem ersten unteren Schalter (S₃) bilden;
eine Zwischenschalteranordnung (14) mit einer oberen Zwischenschalteranordnung (28) und einer unteren Zwischenschalteranordnung (30);
wobei die obere Zwischenschalteranordnung (28) den Neutralpunkt (20) über eine obere Diode (D₁) und einen AC-seitigen oberen Hilfsschalter (S₆) mit einem oberen AC-seitigen Punkt (24) zusammenschaltet, wobei der obere AC-seitige Punkt (24) zwischen dem ersten oberen Schalter (S₁) und dem zweiten oberen Schalter (S₂) vorgesehen ist;
wobei die obere Zwischenschalteranordnung (28) eine weitere obere Diode (D₅) umfasst, die den oberen DC-Zwischenkreispunkt (18) mit dem AC-seitigen oberen Hilfsschalter (S₆) verbindet;
wobei die obere Zwischenschalteranordnung (28) dafür ausgelegt ist, den oberen DC-Zwischenkreispunkt (18) über den AC-seitigen oberen Hilfsschalter (S₆) und die weitere obere Diode (D₅) mit dem oberen AC-seitigen Punkt (24) zusammenzuschalten;
wobei die untere Zwischenschalteranordnung (30) den Neutralpunkt (20) über eine untere Diode (D₂) und einen unteren AC-seitigen Hilfsschalter (S₈) mit einem unteren AC-seitigen Punkt (26) zusammenschaltet, wobei der untere AC-seitige Punkt (26) zwischen dem ersten unteren Schalter (S₃) und dem zweiten unteren Schalter (S₄) vorgesehen ist;
wobei die untere Zwischenschalteranordnung (30) eine weitere untere Diode (D₇) umfasst, die den unteren DC-Zwischenkreispunkt (22) mit dem AC-seitigen unteren Hilfsschalter (S₈) zusammenschaltet;
wobei die untere Zwischenschalteranordnung (30) dafür ausgelegt ist, den unteren DC-Zwischenkreispunkt (22) über den AC-seitigen unteren Hilfsschalter (S₈) und die weitere untere Diode (D₇) mit dem unteren AC-seitigen Punkt (26) zusammenzuschalten;
**dadurch gekennzeichnet, dass**
die obere Zwischenschalteranordnung (28) eine obere Hilfsdiode (D₃) umfasst, die den oberen DC-Zwischenkreispunkt (18) mit einem Punkt (38) zwischen zwei in Reihe geschalteten Teilschaltern (S₁ₐ, S_{1b}) des ersten oberen Schalters (S₁) zusammenschaltet;
die untere Zwischenschalteranordnung (30) eine untere Hilfsdiode (D₄) umfasst, die den unteren DC-Zwischenkreispunkt (22) mit einem Punkt (40) zwischen zwei in Reihe geschalteten Teilschaltern (S₄ₐ, S_{4b}) des zweiten unteren Schalters (S₄) zusammenschaltet.

2. Wandler (10) nach einem der vorstehenden Ansprüche,
wobei eine Leitungsrichtung der oberen Hilfsdiode (D₃) von dem oberen DC-Zwischenkreispunkt (18) weg verläuft;
wobei eine Leitungsrichtung der unteren Hilfsdiode (D₄) in Richtung des unteren DC-Zwischenkreispunkts (22) verläuft.

3. Wandler (10) nach einem der vorstehenden Ansprüche,
wobei die obere Diode (D₁) der oberen Zwischenschalteranordnung (28) eine Leitungsrichtung von dem Neutralpunkt (20) zu dem oberen AC-seitigen Hilfsschalter (S₆) hat;
wobei die untere Diode (D₂) der unteren Zwischenschalteranordnung (30) eine Leitungsrichtung von dem AC-seitigen unteren Hilfsschalter (S₈) zu dem Neutralpunkt (20) hat.

4. Wandler (10) nach einem der vorstehenden Ansprüche,
wobei der erste obere Schalter (S₁) der zweite obere Schalter (S₂), der erste untere Schalter (S₃) und der zweite untere Schalter (S₄) der AC-seitigen Schalteranordnung (16) jeweils einen Halbleiterschalter umfassen.

5. Wandler (10) nach einem der vorstehenden Ansprüche,
wobei der erste obere Schalter (S₁) der zweite obere Schalter (S₂), der erste untere Schalter (S₃) und der zweite untere Schalter (S₄) der AC-seitigen Schalteranordnung (16) jeweils die gleiche Bemessungsspannung haben.

6. Wandler (10) nach einem der vorstehenden Ansprüche,
wobei eine Bemessungsspannung des AC-seitigen oberen Hilfsschalters (S₆) und/oder des AC-seitigen unteren Hilfsschalters (S₈) halb so groß ist wie eine Bemessungsspannung von mindestens entweder dem ersten oberen Schalter (S₁) dem zweiten oberen Schalter (S₂), dem ersten unteren Schalter (S₃) oder dem zweiten unteren Schalter (S₄) der AC-seitigen Schalteranordnung (16).

7. Wandler (10) nach einem der vorstehenden Ansprüche,
wobei eine Bemessungsspannung der oberen Diode (D₁), einer weiteren oberen Diode (D₅) oder einer oberen Hilfsdiode (D₃), der unteren Diode (D₂), einer weiteren unteren Diode (D₇) und/oder einer unteren Hilfsdiode (D₄) halb so groß ist wie eine Bemessungsspannung von mindestens entweder dem ersten oberen Schalter (S₁), dem zweiten oberen Schalter (S₂), dem ersten unteren Schalter (S₃) oder dem zweiten unteren Schalter (S₄) der AC-seitigen Schalteranordnung (16).

8. Verfahren zum Schalten des Wandlers (10) nach einem der vorstehenden Ansprüche, wobei das Verfahren umfasst:
in einem ersten positiven Schaltzustand, Einschalten des ersten oberen Schalters (S₁) und des zweiten oberen Schalters (S₂) und Ausschalten des ersten unteren Schalters (S₃), des zweiten unteren Schalters (S₄), des AC-seitigen oberen Hilfsschalters (S₆) und des AC-seitigen unteren Hilfsschalters (S₈) ;
in einem zweiten positiven Schaltzustand, Einschalten des zweiten oberen Schalters (S₂) und des AC-seitigen oberen Hilfsschalters (S₆) und Ausschalten des ersten oberen Schalters (S₁) des ersten unteren Schalters (S₃), des zweiten unteren Schalters (S₄) und des AC-seitigen unteren Hilfsschalters (S₈);
in einem neutralen Schaltzustand, Einschalten des zweiten oberen Schalters (S₂) und des ersten unteren Schalters (S₃), des AC-seitigen oberen Hilfsschalters (S₆) und des AC-seitigen unteren Hilfsschalters (S₈) und Ausschalten des ersten oberen Schalters (S₁) und des zweiten unteren Schalters (S₂);
in einem ersten negativen Schaltzustand, Einschalten des ersten unteren Schalters (S₃) und des zweiten unteren Schalters (S₄), und Ausschalten des ersten oberen Schalters (S₁), des zweiten oberen Schalters (S₂), des AC-seitigen oberen Hilfsschalters (S₆) und des AC-seitigen unteren Hilfsschalters (S₈) ;
in einem zweiten negativen Schaltzustand, Einschalten des ersten unteren Schalters (S₃) und des AC-seitigen unteren Hilfsschalters (S₈) und Ausschalten des ersten oberen Schalters (S₁), des zweiten oberen Schalters (S₂), des zweiten unteren Schalters (S₄) und den AC-seitigen oberen Hilfsschalters (S₆).

## Revendications

1. Convertisseur (10) électrique multiniveau, comprenant :
une liaison CC (12) composée d'un premier condensateur supérieur (C₁), d'un deuxième condensateur supérieur (C₂), d'un premier condensateur inférieur (C₃) et d'un deuxième condensateur inférieur (C₄), qui sont connectés en série les uns avec les autres entre une entrée CC positive (p) et une entrée CC négative (n) et qui fournissent un point neutre (20) entre le deuxième condensateur supérieur (C₂) et le premier condensateur inférieur (C₃), un point de liaison CC supérieur (18) entre le premier condensateur supérieur (C₁) et le deuxième condensateur supérieur (C₂), et un point de liaison CC inférieur (22) entre le premier condensateur inférieur (C₃) et le deuxième condensateur inférieur (C₄) ;
un dispositif de commutateur côté CA (16) composé d'un premier commutateur supérieur (S₁), d'un deuxième commutateur supérieur (S₂), d'un premier commutateur inférieur (S₃) et d'un deuxième commutateur inférieur (S₄), qui sont connectés en série les uns avec les autres entre l'entrée CC positive (p) et l'entrée CC négative (n) et qui fournissent une sortie CA (a) entre le deuxième commutateur supérieur (S₂) et le premier commutateur inférieur (S₃) ;
un dispositif de commutation intermédiaire (14) comprenant un dispositif de commutation intermédiaire supérieur (28) et un dispositif de commutation intermédiaire inférieur (30) ;
dans lequel le dispositif de commutation intermédiaire supérieur (28) interconnecte le point neutre (20) avec un point supérieur côté CA (24) via une diode supérieure (D₁) et un commutateur auxiliaire supérieur côté CA (S₆), le point supérieur côté CA (24) étant prévu entre le premier commutateur supérieur (S₁) et le deuxième commutateur supérieur (S₂) ;
dans lequel le dispositif de commutation intermédiaire supérieur (28) comprend une diode supérieure supplémentaire (D₅) interconnectant le point de liaison CC supérieur (18) avec le commutateur auxiliaire supérieur côté CA (S₆) ;
dans lequel le dispositif de commutation intermédiaire supérieur (28) est adapté pour interconnecter le point de liaison CC supérieur (18) avec le point supérieur côté CA (24) via le commutateur auxiliaire supérieur côté CA (S₆) et la diode supérieure supplémentaire(D₅) ;
dans lequel le dispositif de commutation intermédiaire inférieur (30) interconnecte le point neutre (20) avec un point inférieur côté CA (26) via une diode inférieure (D₂) et un commutateur auxiliaire inférieur côté CA (S₈), le point inférieur côté CA (26) étant prévu entre le premier commutateur inférieur (S₃) et le deuxième commutateur inférieur (S₄) ;
dans lequel le dispositif de commutation intermédiaire inférieur (30) comprend une diode inférieure supplémentaire (D₇) interconnectant le point de liaison CC inférieur (22) avec le commutateur auxiliaire inférieur côté CA (S₈) ;
dans lequel le dispositif de commutation intermédiaire inférieur (30) est adapté pour interconnecter le point de liaison CC inférieur (22) avec le point inférieur côté CA (26) via le commutateur auxiliaire inférieur côté CA (S₈) et la diode inférieure supplémentaire (D₇) ;
**caractérisé en ce que**
le dispositif de commutation intermédiaire supérieur (28) comprend une diode auxiliaire supérieure (D₃) interconnectant le point de liaison CC supérieur (18) avec un point (38) entre deux commutateurs partiels (S₁ₐ, S_{1b}) connectés en série du premier commutateur supérieur (S₁) ;
le dispositif de commutation intermédiaire inférieur (30) comprend une diode auxiliaire inférieure (D₄) interconnectant le point de liaison CC inférieur (22) avec un point (40) entre deux commutateurs partiels (S₄ₐ, S_{4b}) connectés en série du deuxième commutateur inférieur (S₄).

2. Convertisseur (10) selon l'une des revendications précédentes,
dans lequel une direction de conduction de la diode auxiliaire supérieure (D₃) est éloignée du point de liaison CC supérieur (18) ;
dans lequel une direction de conduction de la diode auxiliaire inférieure (D₄) se trouve vers le point de liaison CC inférieur (22).

3. Convertisseur (10) selon l'une des revendications précédentes,
dans lequel la diode supérieure (D₁) du dispositif de commutation intermédiaire supérieur (28) a une direction de conduction allant du point neutre (20) au commutateur auxiliaire supérieur côté CA (S₆) ;
dans lequel la diode inférieure (D₂) du dispositif de commutation intermédiaire inférieur (30) a une direction de conduction allant du commutateur auxiliaire inférieur côté CA (S₈) au point neutre (20) .

4. Convertisseur (10) selon l'une des revendications précédentes,
dans lequel chacun parmi le premier commutateur supérieur (S₁), le deuxième commutateur supérieur (S₂), le premier commutateur inférieur (S₃) et le deuxième commutateur inférieur (S₄) du dispositif de commutateur côté CA (16) comprend un commutateur à semi-conducteur.

5. Convertisseur (10) selon l'une des revendications précédentes,
dans lequel le premier commutateur supérieur (S₁), le deuxième commutateur supérieur (S₂), le premier commutateur inférieur (S₃) et le deuxième commutateur inférieur (S₄) du dispositif de commutateur côté CA (16) ont la même tension nominale.

6. Convertisseur (10) selon l'une des revendications précédentes,
dans lequel une tension nominale du commutateur auxiliaire supérieur côté CA (S₆) et/ou du commutateur auxiliaire inférieur côté CA (S₈) fait la moitié d'une tension nominale d'au moins l'un parmi le premier commutateur supérieur (S₁), le deuxième commutateur supérieur (S₂), le premier commutateur inférieur (S₃) et le deuxième commutateur inférieur (S₄) du dispositif de commutateur côté CA (16).

7. Convertisseur (10) selon l'une des revendications précédentes,
dans lequel une tension nominale de la diode supérieure (D₁), d'une diode supérieure supplémentaire (D₅) ou d'une diode auxiliaire supérieure (D₃), de la diode inférieure (D₂), d'une diode inférieure supplémentaire (D₇) et/ou d'une diode auxiliaire inférieure (D₄) fait la moitié d'une tension nominale d'au moins l'un parmi le premier commutateur supérieur (S₁), le deuxième commutateur supérieur (S₂), le premier commutateur inférieur (S₃) et le deuxième commutateur inférieur (S₄) du dispositif de commutateur côté CA (16).

8. Procédé de commutation du convertisseur (10) selon l'une des revendications précédentes, le procédé comprenant :
dans un premier état de commutation positif, l'activation du premier commutateur supérieur (S₁) et du deuxième commutateur supérieur (S₂), et la désactivation du premier commutateur inférieur (S₃), du deuxième commutateur inférieur (S₄), du commutateur auxiliaire supérieur côté CA (S₆) et du commutateur auxiliaire inférieur côté CA (S₈) ;
dans un deuxième état de commutation positif, l'activation du deuxième commutateur supérieur (S₂) et du commutateur auxiliaire supérieur côté CA (S₆), et la désactivation du premier commutateur supérieur (S₁) du premier commutateur inférieur (S₃), du deuxième commutateur inférieur (S₄), et du commutateur auxiliaire inférieur côté CA (S₈) ;
dans un état de commutation neutre, l'activation du deuxième commutateur supérieur (S₂) et du premier commutateur inférieur (S₃), du commutateur auxiliaire supérieur côté CA (S₆) et du commutateur auxiliaire inférieur côté CA (S₈), et la désactivation du premier commutateur supérieur (S₁) et du deuxième commutateur inférieur (S₂) ;
dans un premier état de commutation négatif, l'activation du premier commutateur inférieur (S₃) et du deuxième commutateur inférieur (S₄), et la désactivation du premier commutateur supérieur (S₁), du deuxième commutateur supérieur (S₂), du commutateur auxiliaire supérieur côté CA (S₆) et du commutateur auxiliaire inférieur côté CA (S₈) ;
dans un deuxième état de commutation négatif, l'activation du premier commutateur inférieur (S₃) et du commutateur auxiliaire inférieur côté CA (S₈), et la désactivation du premier commutateur supérieur (S₁), du deuxième commutateur supérieur (S₂), du deuxième commutateur inférieur (S₄) et du commutateur auxiliaire supérieur côté CA (S₆).
